Europäisches Patentamt

European Patent Office

Office européen des brevets

(19)

(11) Numéro de publication: **0 323 943**
**A2**

(12) **DEMANDE DE BREVET EUROPEEN**

(21) Numéro de dépôt: **89500002.4**

(22) Date de dépôt: **04.01.89**

(51) Int. Cl.⁴: **H 01 C 17/00**
H 01 C 17/14, H 01 C 7/18,
H 01 C 10/08
// G01F23/70

(30) Priorité: **08.01.88 FR 8800457**
**26.12.88 FR 8817177**

(43) Date de publication de la demande:
**12.07.89 Bulletin 89/28**

(84) Etats contractants désignés: **ES GB IT**

(71) Demandeur: **NAVARRA DE COMPONENTES
ELECTRONICOS, S.A.
Poligono Industrial s/n
E-31500 Tudela (Navarra) (ES)**

(72) Inventeur: **Castellano Aldave, Jesús Carlos
Poligono Industrial s/n
E-31500 Tudela (Navarra) (ES)**

(74) Mandataire: **Manresa Val, Manuel
Gerona n. 34
E-08010 Barcelona (ES)**

(54) **Procédé de fabrication de résistances électriques variables et résistances obtenues par la mise en oeuvre de ce procédé.**

(57) L'invention concerne le domaine des résistances électriques calibrées, variables par déplacement d'un curseur sur leur surface, utilisant comme support de base une plaque de circuit imprimé (1), conventionnel possédant des pistes conductrices (2), géneralement indépendantes, ayant la particularité de comporter:

   a) une première couche de matériau conducteur électrique (3),

   b) une deuxième couche de matériau conducteur électrique (5), dans une zone reservée (4);

   c) une couche d'isolant électrique (6), venant protéger ladite zone (4);

   d) une couche diélectrique (10), venant combler les interstices existant dans la zone (8), de contact avec le curseur, entre les conducteurs (2), (3).

Fig.2    (AB)

EP 0 323 943 A2

**Description**

# PROCEDE DE FABRICATION DE RESISTANCES ELECTRIQUES VARIABLES ET RESISTANCES OBTENUES PAR LA MISE EN OEUVRE DE CE PROCEDE

La présente invention concerne le domaine des résistances électriques calibrées, variables par déplacement d'un curseur sur leur surface, utilisant comme support de base une plaque de circuit imprimé conventionnel sur laquelle on a realisé, sur au moins une de ses faces, par attaque chimique classique, des pistes conductrices par exemple en cuivre, généralement indépendantes selon des formes et des dimensions bien déterminées en rapport avec la loi de variation de la resistance souhaitée. Ladite resistance pouvant être utilisée, par exemple lorsqu'elle est associée à un flotteur, à la mesure du niveau de liquide dans un réservoir.

Les resistances connues du genre en question sont généralement de 3 types:

a) celles utilisant comme support de la céramique sur laquelle un élément résistant est sérigraphié à partir d'une pâte spéciale, par exemple du type CERMET;

b) celles utilisant comme support un circuit imprimé classique incorporant une résistance à base d'un alliage par exemple du type constantan;

c) celles utilisant un fil électrique continu, de caractéristiques bien définies, collé sur un support isolant.

Dans touts les cas, l'élement résistant se présente sous la forme de pistes conductrices selon une trajectoire sinusoidale, en zigzag, en escalier ou toute autre forme. Dans le cas (c), on peut réaliser uniquement des lois de variation linéaire et non logarithmique, ne pouvant pas s'adapter pour offrir une indication précise concernant l'utilisation de configurations géometriques déterminées de réservoirs. En outre, l'element résistant n'est pas en général protégé de sorte qu'il se dégrade dans le temps au contact des divers agents chimiques agressifs contenus dans le réservoir et produisant ainsi une modification de la valeur de la résistance. L'element résistant ou le support, dans le cas (a), possède également une faible résistance mécanique, affectée par les vibrations, qui a pour conséquence de dégrader le contact "curseur-surface conductrice".

Concernant les résistances du type (a), la technique utililisée est très couteuse car elle met en oeuvre 2 opérations de sérigraphie, la première pour réaliser les pistes conductrices et la deuxième pour réaliser la partie résistante (résistivité).

Dans ce produit, comme dans celui de la présente invention, il y a une phase ultérieure d'ajustement de la valeur de la résistance pour l'utilisation du laser pour couper quelques parties de la zone résistante après avoir mesuré la résistance électriques de chaque élément.

Concernant les résistances du type (b), pour obtenir des lois de variation complexes, il faut mettre en oeuvre des techniques également très couteuses.

Concernant les résistances du type (c) on ne peut malheureusement obtenir que des lois linéaires avec des fils d'une grande fragilité.

La presente invention a notamment pour but de remédier à ces divers inconvénients et concerne à cet effet une résistance électrique calibrée, variable par déplacement d'un curseur sur sa surface, utilisant comme support de base une plaque de circuit imprimé conventionnel sur laquelle on a réalisé, sur au moins une de ses faces, par attaque chimique classique, des pistes conductrices, par exemple en cuivre, généralement indépendantes, selon des formes et des dimensions bien déterminées, sur lesquelles on a déposé, partiellement ou totalement, par électrolyse, un matériau conducteur électrique ayant la particularité de posséder une résistance mécanique élevée à l'abrasion, caractérisée en ce qu'elle est obtenue par la mise en oeuvre d'un procédé qui consiste:

a) à déposer, sur une zone réservée incluant une partie des pistes conductrices et une partie de la plaque diélectrique, chimiquement, un matériau conducteur électrique destiné à donner la résistivité souhaitée à la résistance électrique, ladite zone reservée ayant une surface et une forme en rapport avec la loi de variation de la résistance souhaitée;

b) à déposer, sur une surface s'étendant au moins sur ladite zone de ladite résistance, un isolant diélectrique destiné à la proteger des divers agents chimiques agressifs des milieux dans lesquels elle sera utilisée;

c) à déposer sur une zone couvrant au moins la partie des pistes conductrices de la zone sur laquelle se déplace le curseur, une couche de matériau diélectrique tel de la matière plastique, et, ensuite, à polir ladite zone afin d'obtenir une surface plane constituée alternativement par le matériau conducteur électrique initial poli, et pour le matériau diélectrique, nouvellement déposé et également poli restant dans les interstices des pistes conductrices.

Ainsi réalisée, la resistance obtenue possède les avantages suivants:
- une grande facilité d'adaptation à une quelconque géometrie de réservoir par la mise en oeuvre de lois de variation de résistance électrique quelconque et plus particulièrement logarithmique;
- un prix de revient très inférieur à celui obtenu par les techniques (a), (b) et (c) décrites précédemment;
- une stabilité et une durée importante de la valeur de la résistance;
- elle ne presente pas une usure prématurée du curseur à cause des interstices existants entre les pistes conductrices sur lesquelles se deplace le curseur.

D'autres caractéristiques et avantages apparaîtront à la lecture de la description détaillée qui suit d'un mode de réalisation préférentiel de l'invention, donné à titre d'exemple non limitatif et représenté aux dessins annexés. Sur ces dessins:

- la figure 1, est une vue de dessus du support de base et la figure 2, sa vue de profil en coupe AB;

- la figure 3, est une vue de dessus de la résistance recouverte du conducteur électrolytique et la figure 4, sa vue de profil en coupe AB;

- la figure 5, est une vue de dessus de la résistance avec le masque délimitant la zone réservée et la figure 6, sa vue de profil en coupe AB;

- la figure 7, est une vue de dessus de la résistance recouverte, dans la zone réservée du conducteur chimique et la figure 8, sa vue de profil en coupe AB;

- la figure 9 est une vue de dessus de l'ensemble après la phase b) et la figure 10 sa vue de profil en coupe AB;

- la figure 11 est une vue de dessus de ladite résistance finie et les figures 12 et 13 les vues de profil en coupe CD, avant et après polissage.

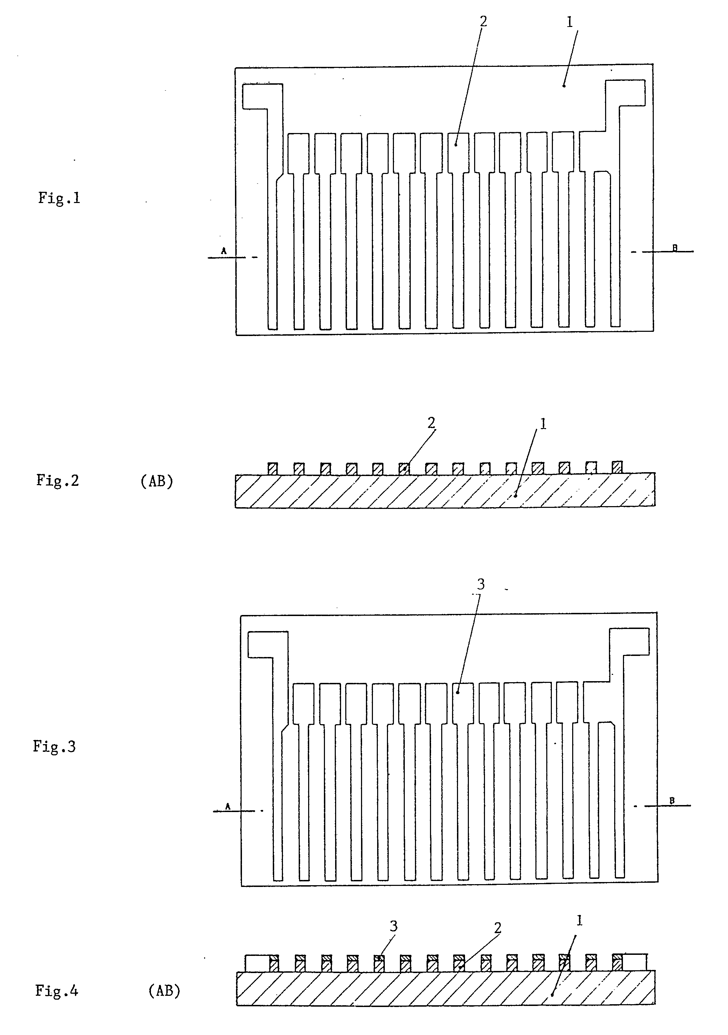

Selon les figures 1 et 2, on utilise un support -1-, diélectrique, en matériau inerte aux agents chimiques agressifs du milieu d'utilisation, sur lequel on a obtenu, par attaque chimique classique, des pistes conductrices -2-, par exemple en cuivre, généralement indépendantes, selon des formes et des dimensions bien déterminées.

Selon les figures 3 et 4, on dépose, partiellement ou totalement, sur lesdites pistes, par électrolyse un matériau conducteur électrique -3-, par exemple du nickel, ayant la particularité de posséder une résistance mécanique élevée à l'abrasion et sur lequel viendra se déplacer le curseur.

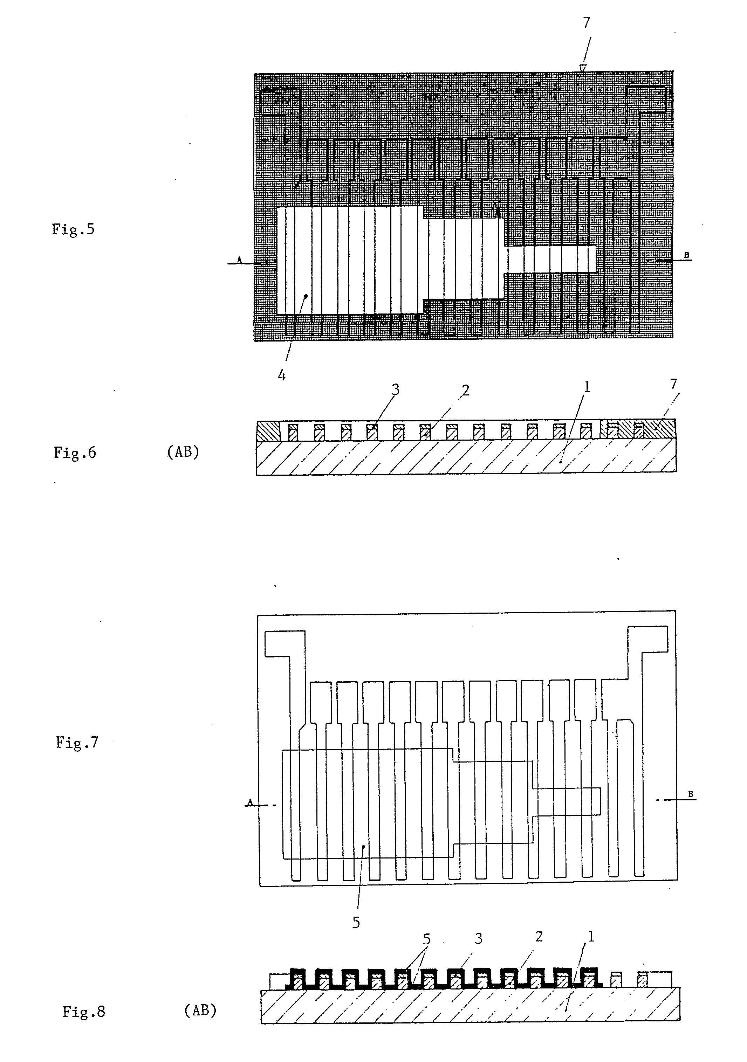

Selon les figures 5,6,7 et 8, on définit, par un masque 7, une zone réservée -4-, incluant une partie des pistes conductrices et une partie de la plaque diélectrique, que l'on active chimiquement, avec par exemple un sel de paladium, pour faciliter l'accrochage d'un matériau conducteur électrique -5-, par exemple un composé à base de nickel, que l'on dépose chimiquement; ce matériau donnant à la résistance la resistivité souhaitée.

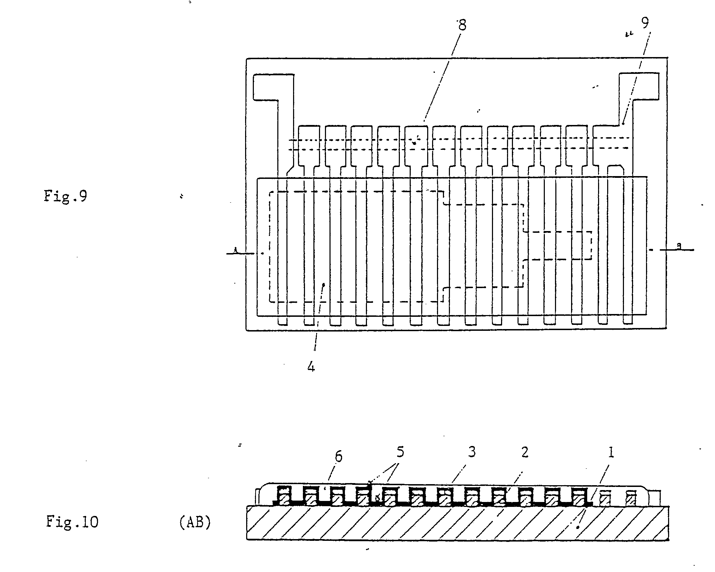

Selon les figures 9 et 10, on dépose, après avoir retiré le masque, sur une surface s'étandant au moins sur ladite zone -4-, de ladite résistance -5-, un isolant diélectrique -6-, destiné à la protéger des divers agents chimiques agressifs des milieux dans lesquels elle sera utilisée, en préservant une zone -8-, qui est recouverte par le matériau conducteur électrique -3-, destinée au déplacement du curseur. La zone d'alerte indiquant la réserve en liquide dans le réservoir porte le repère -9-.

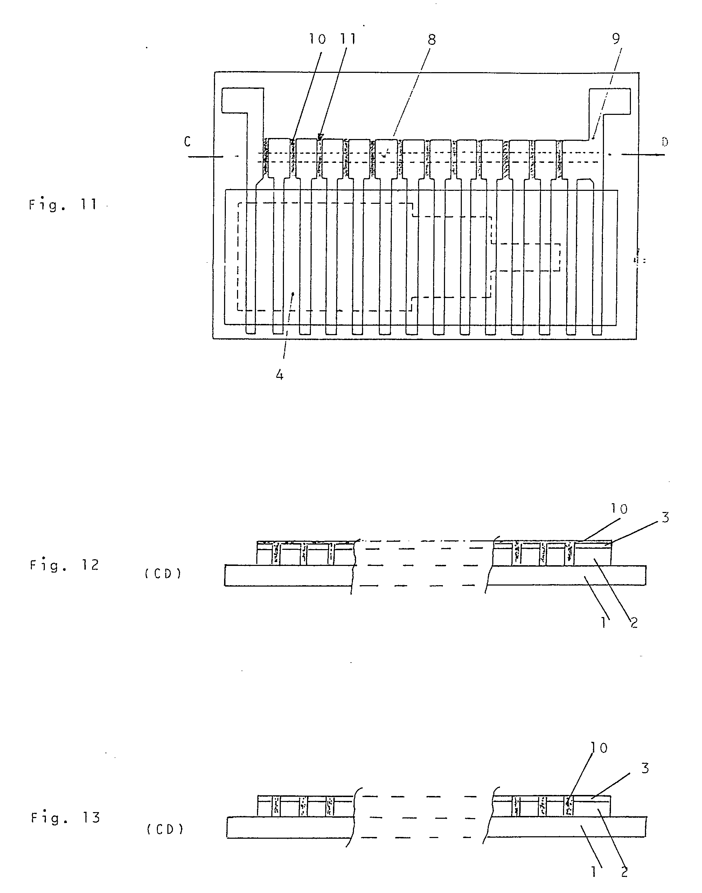

Selon les figures 11, 12 et 13, on dépose sur une zone couvrant au moins la partie des pistes conductrices -2-, de la zone -8-, sur laquelle se déplace le curseur, une couche de matériau diélectrique -10-, tel de la matière plastique, et, ensuite on procede à polir ladite zone, afin d'obtenir une surface plane constituée alternativement par le conducteur électrique initial -3-

poli, et pour le matériau diélectrique -10-, nouvellement déposé et également poli, restant dans les interstices -11-.

Quant à la résistance électrique calibrée, variable, obtenue par la mise en oeuvre de ce procédé, elle comporte essentiellement:

a) une plaque de matériau diélectrique -1-;

b) des pistes conductrices -2-, obtenues par exemple par attaque chimique classique, généralement indépendantes;

c) une première couche de matériau conducteur électrique -3-déposé sur lesdites pistes par exemple par électrolyse et ayant la particularité de posseder une résistance mécanique élevée à l'abrasion; c'est sur ce matériau que viendra se déplacer le curseur : zone -8-;

d) une deuxième couche de matériau conducteur électrique -5-, de résistivité bien déterminée, venant recouvrir une zone réservée -4-, hors zone -8-, incluant une partie des pistes conductrices et une partie de la plaque diélectrique -1-, destiné à donner à la résistance la résistivité souhaitée;

e) une couche d'isolant diélectrique -6- inattaquable par les agents chimiques agressifs du milieu considéré, venant recouvrir une surface s'étendant au moins sur ladite zone réservée -4-;

f) une couche d'un matériau diélectrique -10, tel de la matière plastique, déposé sur une zone couvrant au moins la partie des pistes conductrices de la zone -8-;

Ce dernier dépot -10- subira après un polissage destiné a obtenir une zone -8-, plane, constituée alternativement par le matériau conducteur électrique initial -3-, poli, duquel on a eliminé le diélectrique -10- et par ledit diélectrique -10-, également poli, restant dans les interstices -11-.

Bien entendu, l'invention n'est pas limitée au mode de réalisation décrit et représenté pour lequel on pourra prévoir d'autres variantes, utiliser d'autres matériaux, l'étendre à d'autres applications, sans pour cela sortir du cadre de l'invention.

**Revendications**

1. - Procédé de fabrication de résistances électriques calibrées, variables par déplacement d'un curseur sur leur surface, utilisant comme support de base une plaque de circuit imprimé (1), conventionnel, sur laquelle on a rélisé, sur au moins une de ses faces, par attaque chimique classique, des pistes conductrices (2), par exemple en cuivre, généralement indépendantes, selon des formes et des dimensions bien déterminées, lesdites pistes étant recouvertes d'un matériau conducteur électrique (3), possédant une résistance mécanique élevée à l'abrasion, caractérisé en ce qu'il consiste:

a) à déposer, de préférence chimiquement, sur une zone reservée (4), incluant une partie des pistes conductrices (2) et une partie de la plaque diélectrique (1), un matériau conducteur électrique (5), destiné à donner la résistivité souhaitée à la résistance électrique, ladite zone réservée (4), ayant une surface et une forme en rapport avec la loi de variation de la résistance souhaitée;

b) à déposer, sur une surface s'étendant au moins sur ladite zone (4), de ladite résistance, un isolant diélectrique (6), destiné à la protéger des divers agents chimiques agressifs des milieux dans lesquels elle sera utilisée;

c) à déposer sur une zone couvrant au moins la partie des pistes conductrices (2), de la zone(8), sur laquelle se déplace le curseur, une couche de matériau diélectrique (10), tel de la matière plastique, et, ensuite, à polir ladite zone afin d'obtenir une surface plane constituée alternativement par le conducteur électrique initial (3), poli, et pour le matériau diélectrique (10), nouvellement déposé et également poli, restant dans les interstices (11).

2. - Procédé de fabrication, selon la revendication 1, caractérisé en ce que le matériau conducteur électrique (5), déposé chimiquement dans la phase (a), est un composé à base de nickel.

3. - Procédé de fabrication, selon la revendication 1, caracterisé en ce que la zone réservée (4) est, dans la phase (a), préalablement délimitée par un masque (7), recouvrant la zone non réservée, et activée chimiquement, avec un produit tel qu'un sel de paladium, pour faciliter l'accrochage du matériau déposé chimiquement.

4. - Résistance électrique calibrée, variable, obtenue par la mise en oeuvre du procédé selon l'une quelconque des revendications précédentes, caracterisée en ce qu'elle comporte essentiellement:

a) une plaque de matériau diélectrique (1);

b) des pistes conductrices (2), par exemple en cuivre, généralement indépendantes;

c) une première couche de matériau conducteur électrique (3), de résistance à l'abrasion élevée, venant recouvrir, partiellement ou totalement, les pistes conductrices (2);

d) une deuxième couche de matériau conducteur électrique (5), de resistivité bien déterminée, venant recouvrir une zone réservée (4), incluant une partie des pistes conductrices et una partie de la plaque diélectrique (1);

e) une couche d'isolant diélectrique (6), inattaquable par les agents chimiques agressifs du milieu considéré, venant recouvrir une surface s'étendant au moins sur ladite zone réservée.

f) une couche diélectrique (10), venant combler les interstices (11), existant dans la zone (8), de contact avec le curseur, entre les conducteurs (2), (3).

5. - Résistance électrique calibrée variable, selon la revendication 4, caractérisée en ce que la plaque diélectrique de base est en matériau également inerte aux agents chimiques agressifs du milieu considéré.

Fig.1

Fig.2    (AB)

Fig.3

Fig.4    (AB)

Fig.5

Fig.6 (AB)

Fig.7

Fig.8 (AB)

Fig.9

Fig.10          (AB)

Fig. 11

Fig. 12 (CD)

Fig. 13 (CD)